(19) Europäisches Patentamt

European Patent Office

Office européen des brevets

(11) **EP 4 087 180 B1**

(12) # EUROPEAN PATENT SPECIFICATION

(45) Date of publication and mention
of the grant of the patent:
**05.11.2025  Bulletin 2025/45**

(21) Application number: **20922185.2**

(22) Date of filing: **24.02.2020**

(51) International Patent Classification (IPC):
*H04L 9/08* $^{(2006.01)}$     *H04L 9/30* $^{(2006.01)}$
*H04L 9/40* $^{(2022.01)}$

(52) Cooperative Patent Classification (CPC):
**H04L 9/0894; H04L 9/3073; H04L 63/0442;
H04L 63/061**

(86) International application number:
**PCT/CN2020/076438**

(87) International publication number:
**WO 2021/168614 (02.09.2021 Gazette 2021/35)**

(54) **DATA ENCRYPTION PROCESSING METHOD, DATA DECRYPTION PROCESSING METHOD, APPARATUS, AND ELECTRONIC DEVICE**

DATENVERSCHLÜSSELUNGSVERFAHREN, DATENENTSCHLÜSSELUNGSVERFAHREN, GERÄT UND ELEKTRONISCHE VORRICHTUNG

PROCÉDÉ DE TRAITEMENT DE CHIFFREMENT DE DONNÉES, PROCÉDÉ DE TRAITEMENT DE DÉCHIFFREMENT DE DONNÉES, APPAREIL ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.11.2022  Bulletin 2022/45**

(73) Proprietor: **Shenzhen Yinwang Intelligent
Technologies Co., Ltd.
Shenzhen City, Guangdong 518129 (CN)**

(72) Inventors:
• **YANG, Yanjiang
Shenzhen, Guangdong 518129 (CN)**
• **ZHONG, Steven Yin
Shenzhen, Guangdong 518129 (CN)**

• **WEI, Zhuo
Shenzhen, Guangdong 518129 (CN)**

(74) Representative: **Gill Jennings & Every LLP
The Broadgate Tower
20 Primrose Street
London EC2A 2ES (GB)**

(56) References cited:
**EP-B1- 1 747 638          CN-A- 106 533 662
CN-A- 106 533 662      CN-A- 107 733 646
CN-A- 109 495 454      US-A1- 2013 013 921**

• **"Chapter 12: Key Establishment Protocols ED - Menezes A J; Van Oorschot P C; Vanstone S A", 1 October 1996 (1996-10-01), XP001525012, ISBN: 978-0-8493-8523-0, Retrieved from the Internet <URL:http://www.cacr.math.uwaterloo.ca/hac/>**

## Description

## TECHNICAL FIELD

This application relates to communications technologies, and in particular, to a data encryption processing method, a data decryption processing method, an apparatus, and an electronic device.

## BACKGROUND

With rapid development of wireless communications technologies, an increasing quantity of industries and fields begin to adopt the technologies, for example, an internet of vehicles technology. In the internet of vehicles, a vehicle-mounted device installed on a vehicle effectively uses dynamic information of all vehicles, infrastructure information, and the like on an information network platform by using the wireless communications technologies, to provide different function services during vehicle running, for example, an inter-vehicle distance control service and a navigation service. The vehicle in the internet of vehicles interacts with infrastructures and surrounding vehicles in real time. Therefore, each vehicle in the internet of vehicles generates a large amount of data. The data may include, for example, vehicle diagnosis data, a log, in-vehicle system access data, and data of communication with the outside. The data needs to be uploaded to a cloud server for storage. Because safe vehicle traveling is critical, the data stored in the cloud server may need to be read by a device in a supervision institution (referred to as a supervision device in embodiments of this application). Because the vehicle data is sensitive data, the data needs to be encrypted during transmission and storage, and a reading party needs to perform decryption for data reading. For example, before uploading the data to the cloud server, the vehicle encrypts the data to obtain a ciphertext, and sends the ciphertext to the cloud server. The cloud server stores the ciphertext. When the cloud server or the supervision device needs to read the data, the cloud server or the supervision device first decrypts the ciphertext to obtain available plaintext data. Therefore, how to encrypt and decrypt data in the internet of vehicles needs to be resolved.

In the conventional technology, a random key-based encryption and decryption method is proposed. In the method, a vehicle, a cloud server, and a supervision device generate respective public-private key pairs. When encrypting vehicle data, the vehicle generates a random key, encrypts the random key by using public keys of the vehicle, the cloud server, and the supervision device, and encrypts the vehicle data by using the random key. When the cloud server or the supervision device needs to read the vehicle data, the cloud server or the supervision device obtains the random key through decryption by using a private key, and then obtains the vehicle data through decryption by using the random key.

However, encryption performed by using the existing method is complex, and vehicle running performance may be affected.

"Chapter 12: Key Establishment Protocols ED - Menezes A J; Van Oorschot P C; Vanstone S A", ISBN 978-0-8493-8523-0, (19961001), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541, URL: http://www. cacr.math.uwaterloo.ca/hac/ discloses key establishment protocols and related cryptographic techniques which provide shared secrets between two or more parties, typically for subsequent use as symmetric keys for a variety of cryptographic purposes including encryption, message authentication, and entity authentication. The main focus is two-party key establishment, with the aid of a trusted third party in some cases.

CN 106533662 A discloses methods and devices for transmitting a network safety secret key. One of the methods comprises the follow concrete steps that intelligent equipment generates a first public key and a first private key according to a secret key exchange strategy configured in advance; the intelligent equipment sends the first public key to a user terminal, and enables the user terminal to generate a second public key and a second secret key according to the secret key exchange strategy, according to the secret key exchange strategy, the first public key and the second secret key are used in calculation to obtain a shared secret key, the shared secret key is used for encrypting the network safety secret key, and the second public key and the encrypted network safety secret key are returned; the intelligent equipment receives the second public key from the user terminal, and according to the secret key exchange strategy, the second public key and the first secret key are used in calculation to obtain the shared secret key; and the intelligent equipment receives the encrypted network safety secret key from the user terminal, and obtains the decrypted network safety secret key using the shared secret key. The disclosure can improve the safety of the transmission network safety secret key.

EP 1 747 638 B1 relates to an apparatus and method of establishing an authentic and secure relationship between two messaging systems to exchange data. The apparatus and method is applicable to land-line environments as well as wireless environments. The method comprises: generating a first key pair having a first public key and a first private key; generating a second key pair having a second public key and a second private key, the second public key being generated based upon a shared secret known to the first system and the second system; wherein the first public key is independent of the shared secret; sending sthe second public key and the first public key to the second system; receiving a third public key and a fourth public key generated by the second system, the fourth public key being generated based upon the shared secret; wherein the third public key is independent of the shared secret; calculating a first master key based upon the first private key, the second private key, the third public key and the fourth public key, wherein the first master key is configured to be used in encryption of one or more messages; generating a new second key pair having a new second public key and a new second private key; wherein the new second public key is independent of the shared secret; receiving a new fourth public key from the second system; wherein the new fourth public key is independent of the shared secret; and calculating a new master key based upon the first private key, the new second private key, the third public key, and the new fourth public key using an elliptic curve calculation.

## SUMMARY

Embodiments of this application provide a data encryption processing method, a data decryption processing method, an apparatus, and an electronic device, to resolve a prior-art problem that vehicle running performance may be affected due to complex encryption.

According to a first aspect, an embodiment of this application provides a data encryption processing method. The method includes:

A first device obtains to-be-encrypted target data. The first device encrypts the target data based on a first target key, to obtain encrypted data of the target data. The first device generates the first target key based on a public key of a second device, a public key of a third device, and a private key of the first device wherein that the first target key is generated based on the public key of the second device, the public key of the third device, and the private key of the first device comprises: the first device performs symmetric bilinear pairing processing on e(pkS, pkAA)x to obtain a key e(P, P) xyz which is used as the first target key, wherein pkS is the public key of the second device and is represented as y·P, pkAA is the public key of the third device and is represented as z·P, P is a generator of a system public parameter, x is the private key of the first device, y is a private key of the second device, z is a private key of the third device, and e is a bilinear pairing operation. The first device further sends the encrypted data of the target data to the second device. After being sent to the second device, the encrypted data is decrypted by using a second target key, and the second target key is generated based on a private key of the second device, the public key of the third device, and a public key of the first device, wherein a process in which the second device generates the second target key is the same as the foregoing process in which the first device generates the first target key.

In an embodiment, the first device generates the first target key based on the public key of the second device, the public key of the third device, and the private key of the first device, and encrypts the target data by using the first target key, to obtain the encrypted data of the target data. Then, the first device only needs to send the encrypted data. After receiving the encrypted data, the second device needs to generate the second target key based on the private key of the second device, the public key of the first device, and the public key of the third device only in a manner corresponding to the first device, and obtains the target data through decryption by using the second target key. The first device generates the first target key instead of encrypting the first target key. Therefore, when sending the encrypted data, the first device does not need to add an encrypted first target key but sends a ciphertext that includes only the encrypted data. This avoids an excessively long ciphertext. In addition, because the first device does not need to encrypt the first target key, an amount of computation performed during encryption can be further reduced. This greatly reduces encryption complexity of the first device, prevents data encryption from occupying excessive computing resources and transmission resources, and ensures that performance of the first device is not affected.

In a possible design, the first device may generate the first target key based on the public key of the second device, the public key of the third device, the private key of the first device, and attribute information of the target data. Correspondingly, the second target key may be generated based on the private key of the second device, the public key of the third device, the public key of the first device, and the attribute information of the target data.

The attribute information of the target data includes at least one of a time identifier to which the target data belongs and a data type to which the target data belongs.

In the method, the first device generates the first target key based on the attribute information of the target data in addition to the public key of the second device, the private key of the first device, and the public key of the third device, so that security of the first target key can be greatly improved.

In a possible design, that the first device sends the encrypted data of the target data to the second device includes:

The first device sends the encrypted data of the target data and the attribute information of the target data.

In the method, the first device sends the attribute information of the target data to the second device, so that the second device can correctly obtain the target data through decryption based on the attribute information.

In a possible design, that the first device generates the first target key based on the public key of the second device, the public key of the third device, the private key of the first device, and attribute information of the target data includes:

The first device generates a first intermediate key based on the public key of the second device, the public key of the third device, and the private key of the first device, and the first device further generates the first target key based on the first intermediate key and the attribute information of the target data. Correspondingly, the second target key is generated based on a third intermediate key and the attribute information of the target data, and the third intermediate key is generated based on the private key of the second device, the public key of the third device, and the public key of the first device.

In a possible design, that the first device generates the first target key based on the first intermediate key and the attribute information of the target data includes:

The first device generates a second intermediate key based on the first intermediate key and the time identifier to which the target data belongs, and the first device further generates the first target key based on the second intermediate key and the data type to which the target data belongs. Correspondingly, the second target key is generated based on a fourth intermediate key and the data type to which the target data belongs, and the fourth intermediate key is generated based on the third intermediate key and the time identifier to which the target data belongs.

In the method, the first device first generates the second intermediate key based on the first intermediate key and the time identifier to which the target data belongs. This protects security of the second intermediate key. In addition, the first device generates the first target key based on the second intermediate key and the data type to which the target data belongs. This can refine a data encryption granularity, and prevent security of other data from being affected even if a first target key is leaked.

In a possible design, that the first device generates a first intermediate key based on the public key of the second device, the public key of the third device, and the private key of the first device includes:

The first device performs bilinear pairing processing on the public key of the second device, the public key of the third device, and the private key of the first device to generate the first intermediate key. Correspondingly, the third intermediate key is generated by performing bilinear pairing processing on the private key of the second device, the public key of the third device, and the public key of the first device.

In the method, the first device performs bilinear pairing processing on the public key of the second device, the public key of the third device, and the private key of the first device to generate a key for encryption. Correspondingly, the second device that performs decryption may also perform bilinear pairing processing to generate a key for decryption. In this way, the first device and the second device do not need to exchange third-party keys.

In a possible design, that the first device generates the first target key based on a public key of a second device, a public key of a third device, and a private key of the first device includes:

The first device performs bilinear pairing processing on the public key of the second device, the public key of the third device, and the private key of the first device to generate the first target key. Correspondingly, the second target key is generated by performing bilinear pairing processing on the private key of the second device, the public key of the third device, and the public key of the first device.

In the method, the first device performs bilinear pairing processing on the public key of the second device, the public key of the third device, and the private key of the first device to generate a key for encryption. Correspondingly, the second device that performs decryption may also perform bilinear pairing processing to generate a key for decryption. In this way, the first device and the second device do not need to exchange third-party keys.

In the method, before the first device generates the first target key based on the public key of the second device, the public key of the third device, and the private key of the first device, the method further includes:

The first device generates the public key of the first device and the private key of the first device through bilinear pairing processing.

In the method, the bilinear pairing processing is asymmetric bilinear pairing processing.

According to a second aspect, an embodiment of this application provides a data decryption processing method. The method includes:

A second device receives to-be-decrypted encrypted data. The encrypted data is obtained by encrypting target data by using a first target key, and the first target key is generated based on a private key of a first device, a public key of the second device, and a public key of a third device; wherein that the first target key is generated based on the private key of the first device, the public key of the second device, and the public key of the third device, comprises: the first device first uses $e(pkS, pkAA)x$ to represent a key, and further performs symmetric bilinear pairing processing on $e(pkS, pkAA)x$ to obtain a key $e(P, P)xyz$, which is used as the first target key, wherein $pkS$ is the public key of the second device and is represented as $P \cdot y$, $pkAA$ is the public key of the third device and is represented as $P \cdot z$, $P$ is a generator of a system public parameter, $x$ is the private key of the first device, $y$ is a private key of the second device, $z$ is a private key of the third device, and $e$ is a bilinear pairing operation. The second device generates a second target key based on a public key of the first device, the public key of the third device, and a private key of the second device; wherein a process in which the second device generates the second target key is the same as the foregoing process in which the first device generates the first target key. The second device decrypts the encrypted data based on the second target key, to obtain the target data of the encrypted data.

In an embodiment, the second device generates the second target key based on the public key of the first device, the public key of the third device, and the private key of the second device by using a method corresponding to the first device, and obtains the target data through decryption by using the second target key. Because the first device and the second device each generate a target key based on a public key and a private key, a ciphertext transmitted by the first device does not include the first target key. Therefore, an excessively long ciphertext can be avoided, and the second device does not need to perform a decryption process to obtain the second target key through decryption, so that decryption complexity is reduced. The decryption manner in this embodiment can prevent computing resources and transmission resources from being excessively occupied, and ensure that performance of the second device is not affected.

In a possible design, that the second device generates a second target key based on a public key of the first device, the public key of the third device, and a private key of the second device includes:

The second device generates the second target key based on the public key of the first device, the public key of the third device, the private key of the second device, and attribute information of the target data. The first target key is generated based on the public key of the second device, the public key of the third device, the private key of the first device, and the attribute information of the target data.

The attribute information of the target data includes at least one of a time identifier to which the target data belongs and a data type to which the target data belongs.

In a possible design, that the second device generates the second target key based on the public key of the first device, the public key of the third device, the private key of the second device, and attribute information of the target data includes:

The second device generates a third intermediate key based on the public key of the first device, the public key of the third device, and the private key of the second device. The second device generates the second target key based on the third intermediate key and the attribute information of the target data. Correspondingly, the first target key is generated based on a first intermediate key and the attribute information of the target data, and the first intermediate key is generated based on the public key of the second device, the public key of the third device, and the private key of the first device.

In a possible design, that the second device generates the second target key based on the third intermediate key and the attribute information of the target data includes:

The second device generates a fourth intermediate key based on the third intermediate key and the time identifier to which the target data belongs. The second device generates the second target key based on the fourth intermediate key and the data type to which the target data belongs. Correspondingly, the first target key is generated based on a second intermediate key and the data type to which the target data belongs, and the second intermediate key is generated based on the first intermediate key and the time identifier to which the target data belongs.

In a possible design, that the second device generates a third intermediate key based on the public key of the first device, the public key of the third device, and the private key of the second device includes:

The second device performs bilinear pairing processing on the public key of the first device, the public key of the third device, and the private key of the second device to generate the third intermediate key. Correspondingly, the first intermediate key is generated by performing bilinear pairing processing on the public key of the second device, the public key of the third device, and the private key of the first device.

In a possible design, that the second device generates a second target key based on a public key of the first device, the public key of the third device, and a private key of the second device includes:

The second device performs bilinear pairing processing on the public key of the first device, the public key of the third device, and the private key of the second device to generate the second target key. Correspondingly, the first target key is generated by performing bilinear pairing processing on the public key of the second device, the public key of the third device, and the private key of the first device.

In a possible design, before the second device generates the second target key based on the public key of the first device, the public key of the third device, and the private key of the second device, the method further includes:

The second device generates the public key of the second device and the private key of the second device through bilinear pairing processing.

In a possible design, the bilinear pairing processing is asymmetric bilinear pairing processing.

According to the first aspect, the second aspect, the third aspect, and the fourth aspect, in a possible design, the first device, the second device, and the third device each may be any one of a vehicle, a cloud server, and a supervision device.

According to a third aspect, an embodiment of this application provides an electronic device, including a processor, a memory, and a transceiver. The memory is coupled to the processor, the memory is configured to store computer program code, the computer program code includes computer instructions, and when the processor reads the computer instructions from the memory, the electronic device is enabled to perform the method steps according to the first aspect or the second aspect. The transceiver is coupled to the processor, and the processor controls the transceiver to perform message receiving and sending.

According to a fourth aspect, an embodiment of this application provides a readable storage medium. The readable storage medium stores executable instructions, and when at least one processor of an electronic device executes the executable instructions, the electronic device performs the method steps according to the first aspect or the second aspect.

**BRIEF DESCRIPTION OF DRAWINGS**

FIG. 1 is a diagram of an example system architecture according to an embodiment of this application;
FIG. 2 is a diagram of another example system architecture according to an embodiment of this application;
FIG. 3 is a schematic flowchart of a data encryption processing method according to an embodiment of this application;
FIG. 4 shows an example of a ciphertext c generated by a first device based on a first intermediate key and a time identifier to which target data belongs;
FIG. 5 shows an example of a ciphertext c generated by a first device based on a first intermediate key and a data type to which target data belongs;
FIG. 6 shows an example of a ciphertext c generated by a first device based on a first intermediate key and a time identifier and a data type to which target data belongs;
FIG. 7 is a schematic flowchart of a data decryption processing method according to an embodiment of this application;
FIG. 8 is a diagram of a module structure of a data encryption processing apparatus according to an embodiment of this application;
FIG. 9 is a diagram of a module structure of a data decryption processing apparatus according to an embodiment of this application; and
FIG. 10 is a schematic diagram of a structure of an electronic device 1000 according to an embodiment of this application.

**DESCRIPTION OF EMBODIMENTS**

In a random key-based encryption and decryption method provided in the conventional technology, a vehicle, a cloud server, and a supervision device generate respective public-private key pairs. When encrypting vehicle data, the vehicle generates a random key, encrypts the random key by using public keys of the vehicle, the cloud server, and the supervision device, and encrypts the vehicle data by using the random key. When the cloud server or the supervision device needs to read the vehicle data, the cloud server or the supervision device obtains the random key through decryption by using a private key, and then obtains the vehicle data through decryption by using the random key.

At a vehicle end, it is assumed that a public-private key pair generated by the vehicle is $(pk_V, sk_V)$, where $pk_V$ represents a public key of the vehicle, and $sk_V$ represents a private key of the vehicle. A public-private key pair generated by the cloud server is $(pk_S, sk_S)$, where $pk_S$ represents a public key of the cloud server, and $sk_S$ represents a private key of the cloud server. A public-private key pair generated by the supervision device is $(pk_{AA}, sk_{AA})$, where $pk_{AA}$ represents a public key of the supervision device, and $sk_{AA}$ represents a private key of the supervision device. It is assumed that to-be-encrypted vehicle data is m. When encrypting the vehicle data m, the vehicle generates a random key ek. The vehicle encrypts the vehicle data m based on the public keys of the vehicle, the cloud server, and the supervision device, to obtain encrypted data $[E(pk_V, ek), E(pk_S, ek), E(pk_{AA}, ek), Enc(ek, m)]$. Herein, $E(pk_V, ek)$ indicates data obtained by encrypting the random key ek by using the public key $pk_V$ of the vehicle and an asymmetric encryption algorithm, $E(pk_S, ek)$ indicates data obtained by encrypting the random key ek by using the public key $pk_S$ of the cloud server and the asymmetric encryption algorithm, $E(pk_{AA}, ek)$ indicates data obtained by encrypting the random key ek by using the public key $pk_{AA}$ of the supervision device and the asymmetric encryption algorithm, and Enc(ek, m) indicates data obtained by encrypting the random key by using a symmetric encryption algorithm.

It is assumed that the encrypted data $[E(pk_V, ek), E(pk_S, ek), E(pk_{AA}, ek), Enc(ek, m)]$ is sent to a cloud server end. Correspondingly, when the cloud server decrypts the data, the cloud server first obtains the random key ek from $[E(pk_V, ek), E(pk_S, ek), E(pk_{AA}, ek), Enc(ek, m)]$ through decryption by using the private key $sk_S$ of the cloud server, and then obtains the vehicle data m from $[E(pk_V, ek), E(pk_S, ek), E(pk_{AA}, ek), Enc(ek, m)]$ through decryption by using the random key ek.

In the foregoing encryption process, the vehicle data needs to be encrypted by using the random key, and the random key further needs to be encrypted by separately using the public key of the vehicle, the public key of the cloud server, and the public key of the supervision device. Consequently, an amount of computation performed during encryption is relatively large. In addition, ciphertexts formed by using the foregoing method include a ciphertext formed by encrypting the vehicle data by using the random key, and further include ciphertexts obtained by encrypting the random key by separately using the public key of the vehicle, the public key of the cloud server, and the public key of the supervision device. Consequently, an overall ciphertext length is relatively long. Therefore, in the foregoing encryption method, encryption is complex, and a relatively large quantity of computing resources and transmission resources need to be occupied. Consequently, vehicle running performance may be affected.

It is considered that, in the conventional technology, a manner in which an encryption end encrypts a random key and a decryption end obtains the random key through decryption may affect vehicle running performance. In embodiments of this application, a random key is separately generated on the encryption end and the decryption end, and the random key does not need to be encrypted and added to a ciphertext. This avoids complex encryption caused when the random key is encrypted by using a public key of each end, avoids an excessively long ciphertext caused when a ciphertext obtained by encrypting the random key is added to a ciphertext, and ensures vehicle running performance.

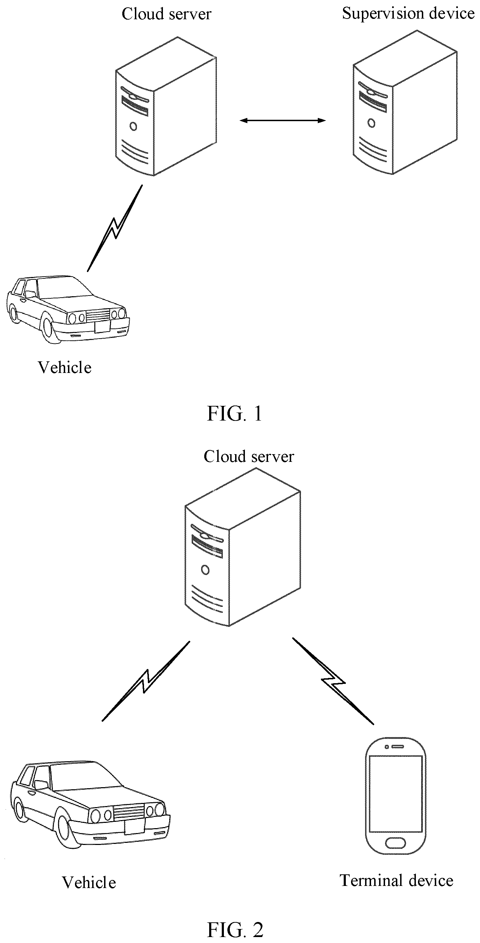

FIG. 1 is a diagram of an example system architecture according to an embodiment of this application. As shown in FIG. 1, the method may be applied to an internet of vehicles, and specifically relates to a vehicle, a cloud server, and a supervision device in the internet of vehicles. The supervision device may be a device in a vehicle supervision department, for example, a device belonging to a traffic police department or a device belonging to a vehicle production manufacturer. The vehicle and the supervision device each are communicatively connected to the cloud server. During running, the vehicle generates vehicle data such as vehicle diagnosis data, a log, in-vehicle system access data, and data of communication with the outside. The vehicle may encrypt the generated vehicle data based on a preset period or in an event triggering manner, and send encrypted data to the cloud server. The cloud server stores the encrypted data. When the cloud server needs to use the vehicle data, the cloud server decrypts the vehicle data by using a decryption method corresponding to the encryption method of a vehicle end. When the supervision device needs to use the vehicle data, the supervision device may send a request to the cloud server to obtain the vehicle data. After receiving the request, the cloud server sends the stored encrypted vehicle data to the supervision device. The supervision device decrypts, for use, the vehicle data by using the decryption method corresponding to the encryption method of the vehicle end.

FIG. 2 is a diagram of another example system architecture according to an embodiment of this application. As shown in FIG. 2, the method may be applied to an internet of vehicles, and specifically relates to a vehicle, a cloud server, and a terminal device in the internet of vehicles. The terminal device may be a device that provides voice and/or data connectivity for a user, for example, a handheld device, a vehicle-mounted device, or a roadside unit having a wireless connection function. Common terminal devices include a mobile phone, a tablet, a notebook computer, a palmtop computer, a mobile internet device (mobile internet device, MID), and a wearable device such as a smartwatch, a smart band, or a pedometer. In the example system architecture, a manner in which the vehicle encrypts data and a manner in which the cloud server stores data are the same as those in FIG. 1. Details are not described herein again. When the terminal device needs to view vehicle data, the terminal device may send request information to the cloud server. After receiving the request information, the cloud server decrypts the vehicle data, obtains, through screening based on information such as permission of the terminal device and a type of requested data, data that is to be sent to the terminal device, encrypts the data that is to be sent to the terminal device, and sends encrypted data to the terminal device. After receiving the data, the terminal device decrypts, for use, the vehicle data by using a decryption method corresponding to the encryption method of a cloud server end.

A communications system on which the internet of vehicles shown in FIG. 1 and FIG. 2 is based may be a wideband code division multiple access (wideband code division multiple access, WCDMA) communications system, a long term evolution (long term evolution, LTE) communications system, a cloud radio access network (cloud radio access network, CRAN), a 5G mobile communications system or a new radio (new radio, NR) communications system or a future mobile communications system, a Wi-Fi system, a future evolved public land mobile network (public land mobile network, PLMN) network, or the like. This is not specifically limited in this embodiment of this application.

It should be understood that, in addition to the internet of vehicles shown in FIG. 1 and FIG. 2, the technical solutions provided in embodiments of this application may be further applied to another network and system in which three-party devices interact with each other to encrypt and decrypt data. For ease of description, the technical solutions in embodiments of this application are described below by using an application in the internet of vehicles as an example in embodiments of this application.

Before the technical solutions in embodiments of this application are described, technical terms in embodiments of this application are first described.

1. Symmetric encryption

The symmetric encryption means that a key used for encryption is the same as a key used for decryption. Common symmetric encryption algorithms include data encryption standard (data encryption standard, DES), advanced encryption standard (advanced encryption standard, AES), Blowfish, and the like.

2. Asymmetric encryption

The asymmetric encryption means that a key used for encryption is different from a key used for decryption. An encryption party uses a public key for encryption, and a decryption party uses a private key for decryption. There is a specific mathematical relationship between a public key and a private key. Data encrypted by using the public key can be decrypted only by using the corresponding private key. Common asymmetric encryption algorithms include public key cryptography (RSA Public Key System, RSA), elliptic curve cryptography (elliptic curve cryptography, ECC), and the like.

3. Key derivation function

The key derivation function (key derivation function, KDF) derives one or more keys from a secret value by using a pseudo-random function. The KDF can be used to extend a key to a longer key or to obtain a key in a required format. The key derivation function is usually used with a non-secret parameter to derive one or more keys from a public secret value. This manner can prevent an attacker obtaining a derived key from learning useful information about an input secret value or any other derived key, and can ensure, by using the KDF, that a derived key has another desired attribute, for example, an attribute of avoiding a "weak key" in some specific encryption systems.

4. Bilinear pairing

The bilinear pairing defines three prime p-order multiplicative cyclic groups $G_1$, $G_2$, and $G_T$, and defines mapping e: $G_1 \times G_2 \to G_T$. The following three properties are met:

(1) Bilinearity

For $\forall g1 \in G_1$, $g2 \in G_2$, and $\forall a,b \in Zp$, $e(g1^a, g2^b) = e(g1, g2)^{ab}$.

(2) Non-degradation

For $\exists g1 \in G_1$ and $g2 \in G_2$, $e(g1, g2) \neq 1_{GT}$.

(3) Computability

There is a valid algorithm, and e(g1, g2) can be computed for $\forall g1 \in G_1$ and $g2 \in G_2$.
In this case, the mapping is referred to as bilinear mapping or bilinear pairing.
If $G_1 = G_2$, the bilinear pairing is referred to as symmetric bilinear pairing; otherwise, the bilinear pairing is referred to as asymmetric bilinear pairing.
Through the bilinear pairing, a linear coefficient may be converted into an exponent.
The following embodiments of this application separately describe the solutions in embodiments of this application from an encryption device side and a decryption device side.

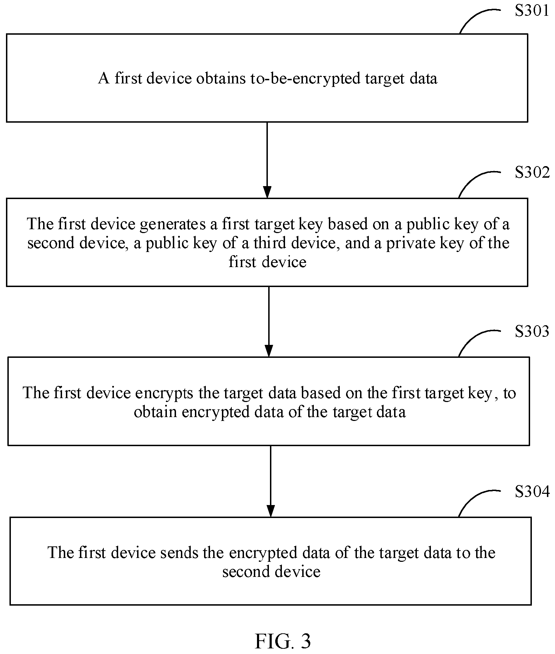

FIG. 3 is a schematic flowchart of a data encryption processing method according to an embodiment of this application. The method is performed by a first device, and the first device is a data encryption device in three-party devices related to data encryption and decryption, for example, the vehicle shown in FIG. 1 or FIG. 2. As shown in FIG. 3, the method includes the following steps.
S301: The first device obtains to-be-encrypted target data.
For example, the first device is a vehicle. During running, the vehicle may generate vehicle diagnosis data, a log, in-vehicle system access data, data of communication with the outside, and the like, and the vehicle may store the data. The vehicle may encrypt and send the data based on a preset period or in an event triggering manner. For example, if the preset period is one day, the vehicle may obtain daily data stored on the vehicle at a moment of each day, encrypt the data in a subsequent manner, and then send encrypted data to a cloud server. For another example, after receiving a data obtaining indication sent by the cloud server, the vehicle obtains, based on the indication, data stored on the vehicle, encrypt the data in a subsequent manner, and then send encrypted data to the cloud server.
S302: The first device generates a first target key based on a public key of a second device, a public key of a third device, and a private key of the first device.
Optionally, three-party devices related to data encryption and decryption include the first device, the second device, and the third device. Therefore, the second device and the third device are the other two devices in the three-party devices. In an example, the second device may be the foregoing cloud server, and the third device may be the foregoing supervision device.
Optionally, before performing encryption or decryption, the first device, the second device, and the third device may generate respective public keys and private keys based on a system public parameter.

In an optional manner, the system public parameter may be determined through negotiation between the first device, the second device, and the third device. For example, the first device generates a system public parameter, and sends the system public parameter to the second device and the third device. If the second device and the third device agree to use the system public parameter, the second device and the third device store the system public parameter and return confirmation information to the first device. If one of the second device and the third device does not agree to use the system public parameter, a new system public parameter may be generated and sent to the other two devices for confirmation. In this way, a system public parameter confirmed by the three-party devices is determined.

In another optional manner, the system public parameter may be determined by delegating one of the three-party devices. For example, the first device may generate a system public parameter, the first device sends the generated system public parameter to the second device and the third device, and the second device and the third device store the system public parameter and generate respective public keys and private keys based on the system public parameter.

In still another optional manner, the system public parameter may be determined by delegating a trusted third-party device. The trusted third-party device is a device other than the first device, the second device, and the third device. The trusted third-party device may separately communicate with the first device, the second device, and the third device.

Optionally, the first device, the second device, and the third device may generate respective public keys and private keys in the same manner. In an optional manner, the first device, the second device, and the third device may generate respective public keys and private keys through bilinear pairing processing.

As described above, the bilinear pairing may be symmetric bilinear pairing or asymmetric bilinear pairing. When a public key and a private key are generated through bilinear pairing processing, symmetric bilinear pairing or asymmetric bilinear pairing may be performed. Descriptions are as follows:

Before the descriptions, it is first assumed that the public key and the private key of the first device are respectively $pk_V$ and $sk_V$, the public key and the private key of the second device are respectively $pk_S$ and $sk_S$, and the public key and the private key of the third device are respectively $pk_{AA}$ and $sk_{AA}$. These symbols are used for representation in the following embodiments of this application. In addition, a public key and a private key that are generated through non-linear pairing processing are represented in a form of a public-private key pair.

1. Symmetric bilinear pairing

The foregoing first manner of determining a system public parameter is used as an example. Based on the foregoing definitions and explanations of the bilinear pairing, the first device, the second device, and the third device may determine a system public parameter $G_1$ through negotiation. Assuming that P is a generator of $G_1$, a public-private key pair $(pk_V, sk_V)$ of the first device may be represented by using Formula (1):

$$(pk_V, sk_V) = (x.P, x \in Z_P) \tag{1}$$

Herein, x.P represents the public key of the first device, and x represents the private key of the first device.

A public-private key pair $(pk_S, sk_S)$ of the second device may be represented by using Formula (2):

$$(pk_S, sk_S) = (y.P, y \in Z_P) \tag{2}$$

Herein, y.P represents the public key of the second device, and y represents the private key of the second device.

A public-private key pair $(pk_{AA}, sk_{AA})$ of the third device may be represented by using Formula (3):

$$(pk_{AA}, sk_{AA}) = (z.P, z \in Z_P) \tag{3}$$

Herein, z.P represents the public key of the third device, and z represents the private key of the third device.

2. Asymmetric linear pairing

The foregoing first manner of determining a system public parameter is still used as the example. Based on the foregoing definitions and explanations of the bilinear pairing, the first device, the second device, and the third device may determine system public parameters $G_1$ and $G_2$ through negotiation. Assuming that $P_1$ is a generator of $G_1$ and $P_2$ is a generator of $G_2$, the public-private key pair $(pk_V, sk_V)$ of the first device may be represented by using Formula (4):

$$(pk_V, sk_V) = (x.P_1, x \in Z_P) \tag{4}$$

Herein, $x.P_1$ represents the public key of the first device, and x represents the private key of the first device.

The public-private key pair $(pk_S, sk_S)$ of the second device may be represented by using Formula (5):

$$(pk_S, sk_S)=((y.P_1, y.P_2), y\in Z_P) \tag{5}$$

Herein, $(y.P_1, y.P_2)$ represents the public key of the second device, and y represents the private key of the second device.

The public-private key pair $(pk_{AA}, sk_{AA})$ of the third device may be represented by using Formula (6):

$$(pk_{AA}, sk_{AA})=(z.P, z\in Z_P) \tag{6}$$

Herein, z.P represents the public key of the third device, and z represents the private key of the third device.

In the process of generating a public-private key pair through non-linear pairing, the public key of either the first device or the second device needs to use both $P_1$ and $P_2$. As shown above, the public key of the first device uses only $P_1$ and the public key of the second device uses both $P_1$ and $P_2$. It should be understood that, in a specific implementation process, the public key of the first device may alternatively use both $P_1$ and $P_2$, and the public key of the second device may use only $P_2$. In this case, the public-private key pair of the first device uses the manner shown in Formula (5), and only y in Formula (5) is replaced with x; and the public-private key pair of the second device uses the manner shown in Formula (4), and only x in Formula (4) is replaced with y.

It should be understood that, when the first device generates the public key and the private key in another manner, a specific form of the system public parameter may be of another form, and is not limited to $G_1$, or $G_1$ and $G_2$.

Optionally, after the first device, the second device, and the third device generate respective public keys and private keys based on the system public parameter in the foregoing manner, one of the first device, the second device, and the third device may provide the public key for the other two devices. For example, the first device may send the public key of the first device to the second device and the third device.

After the first device, the second device, and the third device provide respective public keys for each other, the first device may obtain the public key of the second device and the public key of the third device. On this basis, the first device generates the first target key based on the public key of the second device, the public key of the third device, and the private key of the first device.

S303: The first device encrypts the target data based on the first target key, to obtain encrypted data of the target data.

Optionally, the first device may encrypt the target data by using the symmetric encryption algorithm described above. Assuming that the target data is m, and the first target key obtained by performing the foregoing step is ek, the encrypted data may be Enc(ek, m).

S304: The first device sends the encrypted data of the target data to the second device.

It should be noted that, in this embodiment of this application, the first device is a device for encrypting the target data, the second device is a device for decrypting the target data, and the third device is one of the three-party devices. Specific forms of the first device, the second device, and the third device are not limited in this embodiment of this application. For example, in the application scenario shown in FIG. 1, the first device, the second device, and the third device may be randomly the vehicle, the cloud server, and the supervision device.

When sending data, the first device only needs to send the encrypted data obtained after the target data is encrypted, and does not need to send the first target key. After receiving the encrypted data, the second device generates a second target key by using a method corresponding to the method in which the first device generates the first target key, and obtains the target data through decryption by using a method corresponding to the method in which the first device encrypts the target data. The second device generates the second target key based on the private key of the second device, the public key of the third device, and the public key of the first device, and decrypts the encrypted data by using the second target key, to obtain the target data. A decryption process of the second device is described in detail in the following embodiment.

It should be noted that step S302 only needs to be performed before step S303, and there is no sequence of performing step S302 and step S301.

In this embodiment, the first device generates the first target key based on the public key of the second device, the public key of the third device, and the private key of the first device, and encrypts the target data by using the first target key, to obtain the encrypted data of the target data. Then, the first device only needs to send the encrypted data. After receiving the encrypted data, the second device needs to generate the second target key based on the private key of the second device, the public key of the first device, and the public key of the third device only in a manner corresponding to the first device, and obtains the target data through decryption by using the second target key. The first device generates the first target key instead of encrypting the first target key. Therefore, when sending the encrypted data, the first device does not need to add an encrypted first target key but sends a ciphertext that includes only the encrypted data. This avoids an excessively long ciphertext. In addition, because the first device does not need to encrypt the first target key, an amount of computation performed during encryption can be further reduced. This greatly reduces encryption complexity of the first device, prevents data encryption from occupying excessive computing resources and transmission resources, and ensures that performance of the first device is not affected.

The first device may generate the first target key based on the public key of the second device, the public key of the third device, and the private key of the first device in any one of the following manners.

In a first manner, the first device generates a key based on the public key of the second device, the public key of the third device, and the private key of the first device, and directly uses the generated key as the first target key. Correspondingly, the first device encrypts the target data by using the first target key, and sends the encrypted data.

In a second optional manner, the first device generates a key based on the public key of the second device, the public key of the third device, and the private key of the first device, uses the generated key as a first intermediate key, and generates the first target key based on the first intermediate key and attribute information of the target data. Correspondingly, the first device encrypts the target data by using the first target key, and sends the encrypted data and the attribute information of the target data.

For the foregoing two manners, the following first describes a process in which the first device generates a key based on the public key of the second device, the public key of the third device, and the private key of the first device.

As described above, the first device, the second device, and the third device may generate respective public keys and private keys through bilinear pairing processing. Correspondingly, when generating a key based on the public key of the second device, the public key of the third device, and the private key of the first device, the first device may correspondingly perform bilinear pairing processing on the public key of the second device, the public key of the third device, and the private key of the first device to generate a key.

In one manner, if the public key and the private key are generated through symmetric bilinear pairing processing, the first device correspondingly performs symmetric bilinear pairing processing to generate a key.

It is still assumed that the public key and the private key of the first device are respectively $pk_V$ and $sk_V$, the public key and the private key of the second device are respectively $pk_s$ and $sk_s$, and the public key and the private key of the third device are respectively $pk_{AA}$ and $sk_{AA}$. In this case, the first device first uses $e(pk_S, pk_{AA})^x$ to represent a key, and further performs symmetric bilinear pairing processing on $e(pk_S, pk_{AA})^x$ to obtain a key $e(P, P)^{xyz}$. After the processing, a linear coefficient in $e(pk_S, pk_{AA})^x$ is converted into an exponential coefficient in $e(P, P)^{xyz}$.

It should be noted that meanings of the parameters in the foregoing process are the same as those in the foregoing descriptions. Refer to the foregoing descriptions. Details are not described herein again.

If the first target key is generated in the first manner, the first device may directly use $e(P, P)^{xyz}$ as the first target key, and encrypt the target data by using the first target key.

If the first target key is generated in the second optional manner, the first device may use $e(P, P)^{xyz}$ as the first intermediate key, generate the first target key based on the first intermediate key and the attribute information of the target data, and then encrypt the target data by using the first target key.

In another manner, if the public key and the private key are generated through asymmetric bilinear pairing processing, the first device correspondingly performs asymmetric bilinear pairing processing to generate a key.

It is still assumed that the public key and the private key of the first device are respectively $pk_V$ and $sk_V$, the public key and the private key of the second device are respectively $pk_s$ and $sk_s$, and the public key and the private key of the third device are respectively $pk_{AA}$ and $sk_{AA}$. In this case, the first device first uses $e(y.P_1, pk_{AA})^x$ to represent a key, and further performs asymmetric bilinear pairing processing on $e(y.P_1, pk_{AA})^x$ to obtain a key $e(P_1, P_2)^{xyz}$. After the processing, a linear coefficient in $e(y.P_1, pk_{AA})^x$ is converted into an exponential coefficient in $e(P_1, P_2)^{xyz}$.

It should be noted that meanings of the parameters in the foregoing process are the same as those in the foregoing descriptions. Refer to the foregoing descriptions. Details are not described herein again.

If the first target key is generated in the first manner, the first device may directly use $e(P_1, P_2)^{xyz}$ as the first target key, and encrypt the target data by using the first target key.

If the first target key is generated in the second optional manner, the first device may use $e(P_1, P_2)^{xyz}$ as the first intermediate key, generate the first target key based on the first intermediate key and the attribute information of the target data, and then encrypt the target data by using the first target key.

In this embodiment, the first device performs bilinear pairing processing on the public key of the second device, the public key of the third device, and the private key of the first device to generate a key for encryption. Correspondingly, the second device that performs decryption may also perform bilinear pairing processing to generate a key for decryption. In this way, the first device and the second device do not need to exchange third-party keys.

The foregoing describes the process in which the first device generates a key based on the public key of the second device, the public key of the third device, and the private key of the first device. As described above, if the first target key is generated in the foregoing first manner, the first device directly uses the generated key as the first target key and encrypts the target data. If the first target key is generated in the foregoing second optional manner, the first device uses the generated key as the first intermediate key, and generates the first target key based on the first intermediate key and the attribute information of the target data. The following describes a process in which the first device generates the first target key based on the first intermediate key and the attribute information of the target data.

Optionally, the attribute information of the target data may include at least one of a time identifier to which the target data belongs and a data type to which the target data belongs.

A time to which the target data belongs may be a time segment in which the target data is generated, and the time segment is, for example, a day. The time identifier to which the target data belongs may be a time value. For example, the time identifier to which the target data belongs is 20200101. The data type to which the target data belongs may include, for example, a driving data type, a charging data type, and a k-box data type.

The first device may generate the first target key based on the first intermediate key and the attribute information of the target data min any one of the following manners:

  1. The first device generates the first target key based on the first intermediate key and the time identifier to which the target data belongs.

Optionally, the first device may use each time segment as a period. For example, if one day is one time segment, one day is one period. At a start of each period, the first device generates the first target key based on the first intermediate key and a time identifier of the period.

In an example, the first device may generate the first target key by using the key derivation function KDF explained above.

Assuming that the first target key is ek, the first device may compute ek by using the KDF and Formula (7):

$$ek = KDF(e(P, P)^{xyz}, \text{session-tag}) \tag{7}$$

Herein, $e(P, P)^{xyz}$ is the first intermediate key obtained by using the foregoing method, and session-tag represents a period identifier of a current period.

After the first target key is obtained in this manner, when the first device sends the encrypted data, assuming that the encrypted data obtained after the target data is encrypted is c1, a ciphertext c sent by the first device is (session-tag, c1). In other words, the first device sends the encrypted data and the time identifier to which the target data belongs.

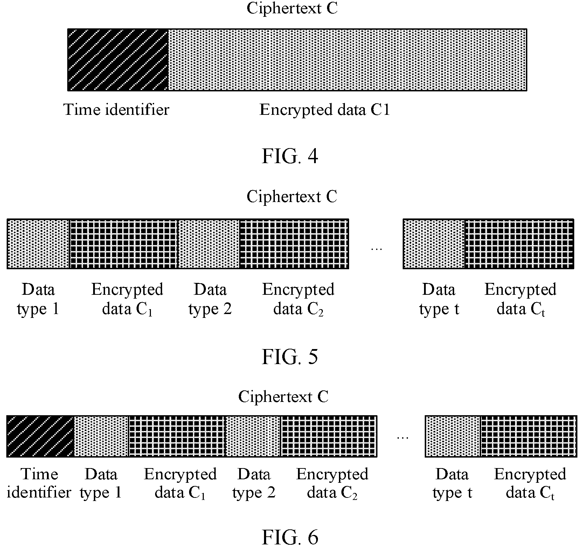

FIG. 4 shows an example of the ciphertext c generated by the first device based on the first intermediate key and the time identifier to which the target data belongs. As shown in FIG. 4, a first part of the ciphertext c is the time identifier session-tag to which the target data belongs, and a part after the time identifier session-tag is the encrypted data c1.

In this manner, the first device generates the first target key based on the first intermediate key and the time identifier to which the target data belongs, so that the first device does not directly use the first intermediate key as the first target key. This protects security of the first intermediate key generated by using the public key and the private key.

2. The first device generates the first target key based on the first intermediate key and the data type to which the target data belongs.

Optionally, the first device generates a first target key for each data type.

For example, it is assumed that a quantity of data types on the first device is t, where t is an integer greater than 0. In this case, for the $i^{th}$ (i is any integer greater than 0 and less than or equal to t) data type type-tag$_i$, the first device may compute a first target key eki of the $i^{th}$ data type by using the KDF and Formula (8):

$$ek_i = KDF(e(P, P)^{xyz}, \text{type-tag}_i) \tag{8}$$

Herein, $e(P, P)^{xyz}$ is the first intermediate key obtained by using the foregoing method.

After the foregoing processing, each data type has a respective first target key.

When encrypting the target data, the first device encrypts, based on the data type to which the target data belongs, the target data by using a first target key corresponding to the data type.

For example, assuming that target data $m = (m_1, ..., m_t)$, and any one piece of target data $m_i$ in m represents data that belongs to the $i^{th}$ data type, the first device may encrypt $m_i$ by using Formula (9), to obtain a ciphertext $c_i$.

$$c_i = Enc(ek_i, m_i) \tag{9}$$

Herein, $ek_i$ is the first target key of the $i^{th}$ data type, and $m_i$ is target data that belongs to the $i^{th}$ data type.

In this manner, the ciphertext c used when the first device sends the encrypted data may be in the following form:

$$c = ((\text{type-tag}_1, c_1), (\text{type-tag}_2, c_2), ..., (\text{type-tag}_t, c_t))$$

FIG. 5 shows an example of the ciphertext c generated by the first device based on the first intermediate key and the data type of the target data. As shown in FIG. 5, the ciphertext c includes a plurality of parts, and each part includes a data type of encrypted data and the encrypted data.

In this manner, the first device generates, based on the first intermediate key and the data type to which the target data belongs, a first target key corresponding to each data type, and encrypts each type of target data by using the first target key corresponding to each data type. This can refine a data encryption granularity, so that different types of data are encrypted by using different keys. This manner can prevent security of other target data from being affected even if a first target key is leaked.

3. The first device generates the first target key based on the first intermediate key, the time identifier to which the target data belongs, and the data type to which the target data belongs.

This manner is a combination of the foregoing two manners, and the first device may combine the foregoing two manners in any one of the following manners.

In a first combination manner, the first device first uses the first manner, that is, generates a key based on the first intermediate key and the time identifier to which the target data belongs, and uses the key as a second intermediate key; and subsequently uses the second manner, that is, uses the second intermediate key as the first intermediate key in the second manner, and generates the first target key based on the second intermediate key and the data type to which the target data belongs.

In a second combination manner, the first device first uses the second manner, that is, separately generates a key of each data type based on the first intermediate key and the data type to which the target data belongs, and separately uses these keys as a second intermediate key; and subsequently, uses the first manner for each second intermediate key, that is, uses the second intermediate key as the first intermediate key in the first manner, and generates the first target key of each data type based on the second intermediate key and the time identifier to which the target data belongs.

The ciphertext c obtained based on any one of the foregoing two combination manners may be in the following form:

$$c=(\text{session-tag}, (\text{type-tag}_1, c_1), (\text{type-tag}_2, c_2), \ldots, (\text{type-tag}_t, c_t))$$

Meanings of the parameters are the same as those described above. Details are not described herein again.

FIG. 6 shows an example of the ciphertext c generated by the first device based on the first intermediate key and the time identifier and the data type to which the target data belongs. As shown in FIG. 6, a first part of the ciphertext c is a time identifier session-tag to which the target data belongs, and a plurality of parts are included after the time identifier session-tag. Each part includes data type of encrypted data and the encrypted data.

After this manner is used, security of the first intermediate key can be protected, and when a first target key is leaked, security of other target data is not affected.

The following describes a data decryption process of the decryption device side.

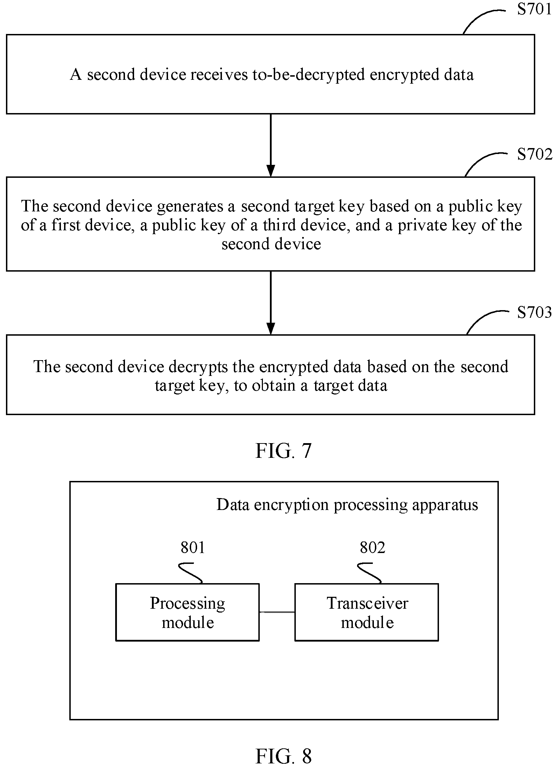

FIG. 7 is a schematic flowchart of a data decryption processing method according to an embodiment of this application. The method is performed by a second device, and the second device is a data decryption device in three-party devices related to data encryption and decryption, for example, the cloud server shown in FIG. 1 or FIG. 2. As shown in FIG. 7, the method includes the following steps.

S701: The second device receives to-be-decrypted encrypted data.

Optionally, the second device may receive a ciphertext sent by a first device, and subsequently use the ciphertext as the to-be-decrypted encrypted data.

The encrypted data is obtained by encrypting the target data by using the first target key in the encryption method in the foregoing embodiment.

It should be understood that step S701 and the following step S702 may not be consecutively performed. For example, after receiving the encrypted data from the first device, the second device first stores the encrypted data. When some events are triggered, for example, when a user indicates the second device to provide vehicle running data, the second device performs the following steps S702 and S703 to obtain the target data.

S702: The second device generates a second target key based on a public key of the first device, a public key of a third device, and a private key of the second device.

A process in which the second device generates the second target key is the same as the foregoing process in which the first device generates the first target key. A difference lies in that the parameters used by the first device are the public key of the second device, the public key of the third device, and the private key of the first device, but the parameters used by the second device are the public key of the first device, the public key of the third device, and the private key of the second device.

Optionally, corresponding to the foregoing encryption manner, the second device may generate the second target key only based on the public key of the first device, the public key of the third device, and the private key of the second device, or the second device may generate the second target key based on the public key of the first device, the public key of the third device, the private key of the second device, and attribute information of the target data.

If the second target key is generated based on the public key of the first device, the public key of the third device, the private key of the second device, and the attribute information of the target data, the second device may first generate a third intermediate key based on the public key of the first device, the public key of the third device, and the private key of the second device, and then generate the second target key based on the third intermediate key and the attribute information of the target data.

The second device generates the second target key based on the third intermediate key and the attribute information of the target data in the following manners:

1. The second device generates the second target key based on the third intermediate key and a time identifier to which the target data belongs.

In this manner, the second device first reads the time identifier to which the target data belongs from the ciphertext, and generates the second target key by using a method same as the method used when the first device generates the first target key based on the first intermediate key and the time identifier to which the target data belongs. For details, refer to the foregoing embodiment. Details are not described herein again.

2. The second device generates the second target key based on the third intermediate key and a data type to which the target data belongs.

In this manner, the second device first reads the data type to which the target data belongs from the ciphertext, and generates a second target key of each data type by using a method same as the method used when the first device generates the first target key based on the first intermediate key and the data type to which the target data belongs. For details, refer to the foregoing embodiment. Details are not described herein again.

3. The second device generates the second target key based on the third intermediate key and the time identifier and the data type to which the target data belongs.

In this manner, the second device first reads the time identifier and the data type to which the target data belongs from the ciphertext, and generates the second target key by using a method same as the method used when the first device generates the first target key based on the first intermediate key and the data type to which the target data belongs. For example, the second device first generates a fourth intermediate key based on the third intermediate key and the time identifier to which the target data belongs, and then generates the second target key based on the fourth intermediate key and the data type to which the target data belongs. For details, refer to the foregoing embodiment. Details are not described herein again.

In addition, corresponding to the first device end, when generating the second target key based on the public key of the first device, the public key of the third device, and the private key of the second device, the second device may perform bilinear pairing processing on the public key of the first device, the public key of the third device, and the private key of the second device to obtain the second target key, or obtain the third intermediate key.

S703: The second device decrypts the encrypted data based on the second target key, to obtain the target data.

Optionally, the second device obtains the target data through decryption by using the second target key and a decryption algorithm corresponding to the first device.

In this embodiment, the second device generates the second target key based on the public key of the first device, the public key of the third device, and the private key of the second device by using a method corresponding to the first device, and obtains the target data through decryption by using the second target key. Because the first device and the second device each generate a target key based on a public key and a private key, a ciphertext transmitted by the first device does not include the first target key. Therefore, an excessively long ciphertext can be avoided, and the second device does not need to perform a decryption process to obtain the second target key through decryption, so that decryption complexity is reduced. The decryption manner in this embodiment can prevent computing resources and transmission resources from being excessively occupied, and ensure that performance of the second device is not affected.

FIG. 8 is a diagram of a module structure of a data encryption processing apparatus according to an embodiment of this application. The apparatus may be the foregoing first device, or may be an apparatus that can enable the first device to implement a function of the first device in the method provided in embodiments of this application. For example, the apparatus may be an apparatus or a chip system in the first device. As shown in FIG. 8, the apparatus includes a processing module 801 and a transceiver module 802.

The processing module 801 is configured to: obtain to-be-encrypted target data; and encrypt the target data based on a first target key, to obtain encrypted data of the target data. The first device generates the first target key based on a public key of a second device, a public key of a third device, and a private key of the first device.

The transceiver module 802 is configured to send the encrypted data of the target data to the second device. The encrypted data is decrypted by using a second target key that is generated based on a private key of the second device, the public key of the third device, and a public key of the first device.

In an optional implementation, the processing module 801 is specifically configured to:
generate the first target key based on the public key of the second device, the public key of the third device, the private key of the first device, and attribute information of the target data, where the second target key is generated based on the private key of the second device, the public key of the third device, the public key of the first device, and the attribute information of the target data.

The attribute information of the target data includes at least one of a time identifier to which the target data belongs and a data type to which the target data belongs.

In an optional implementation, the transceiver module 802 is specifically configured to:
send the encrypted data of the target data and the attribute information of the target data.

In an optional implementation, the processing module 801 is specifically configured to:
generate a first intermediate key based on the public key of the second device, the public key of the third device, and the private key of the first device; and generate the first target key based on the first intermediate key and the attribute information of the target data, where the second target key is generated based on a third intermediate key and the attribute information of the target data, and the third intermediate key is generated based on the private key of the second device, the public key of the third device, and the public key of the first device.

In an optional implementation, the processing module 801 is specifically configured to:
generate a second intermediate key based on the first intermediate key and the time identifier to which the target data belongs; and generate the first target key based on the second intermediate key and the data type to which the target data belongs, where the second target key is generated based on a fourth intermediate key and the data type to which the target data belongs, and the fourth intermediate key is generated based on the third intermediate key and the time identifier to which the target data belongs.

In an optional implementation, the processing module 801 is specifically configured to:
perform bilinear pairing processing on the public key of the second device, the public key of the third device, and the private key of the first device to generate the first intermediate key, where the third intermediate key is generated by performing bilinear pairing processing on the private key of the second device, the public key of the third device, and the public key of the first device.

In an optional implementation, the processing module 801 is specifically configured to:
perform bilinear pairing processing on the public key of the second device, the public key of the third device, and the private key of the first device to generate the first target key, where the second target key is generated by performing bilinear pairing processing on the private key of the second device, the public key of the third device, and the public key of the first device.

In an optional implementation, the processing module 801 is further configured to:
generate the public key of the first device and the private key of the first device through bilinear pairing processing.

In an optional implementation, the bilinear pairing processing is asymmetric bilinear pairing processing.

In the foregoing implementations, the first device may be any one of a vehicle, a cloud server, or a supervision device.

The data encryption processing apparatus provided in this embodiment of this application may perform the method steps in the foregoing method embodiments. Implementation principles and technical effects thereof are similar. Details are not described herein again.

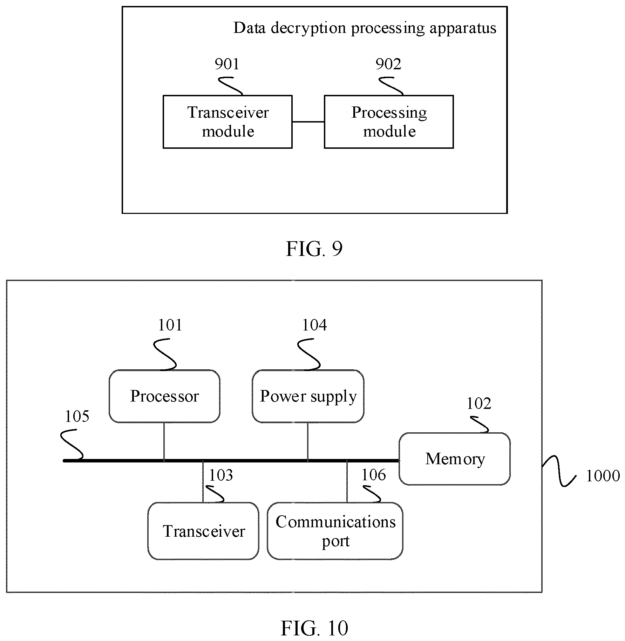

FIG. 9 is a diagram of a module structure of a data decryption processing apparatus according to an embodiment of this application. The apparatus may be the foregoing second device, or may be an apparatus that can enable the second device to implement a function of the second device in the method provided in embodiments of this application. For example, the apparatus may be an apparatus or a chip system in the second device. As shown in FIG. 9, the apparatus includes a transceiver module 901 and a processing module 902.

The transceiver module 901 is configured to receive to-be-decrypted encrypted data. The encrypted data is obtained by encrypting target data by using a first target key, and the first target key is generated based on a private key of a first device, a public key of the second device, and a public key of a third device.

The processing module 902 is configured to: generate a second target key based on a public key of the first device, the public key of the third device, and a private key of the second device; and decrypt the encrypted data based on the second target key, to obtain the target data of the encrypted data.

In an optional implementation, the processing module 902 is specifically configured to:
generate the second target key based on the public key of the first device, the public key of the third device, the private key of the second device, and attribute information of the target data, where the first target key is generated based on the public key of the second device, the public key of the third device, the private key of the first device, and the attribute information of the target data.

The attribute information of the target data includes at least one of a time identifier to which the target data belongs and a data type to which the target data belongs.

In an optional implementation, the processing module 902 is specifically configured to:

generate a third intermediate key based on the public key of the first device, the public key of the third device, and the private key of the second device; and generate the second target key based on the third intermediate key and the attribute information of the target data, where the first target key is generated based on a first intermediate key and the attribute information of the target data, and the first intermediate key is generated based on the public key of the second device, the public key of the third device, and the private key of the first device.

In an optional implementation, the processing module 902 is specifically configured to:

generate a fourth intermediate key based on the third intermediate key and the time identifier to which the target data belongs; and generate the second target key based on the fourth intermediate key and the data type to which the target data belongs, where the first target key is generated based on a second intermediate key and the data type to which the target data belongs, and the second intermediate key is generated based on the first intermediate key and the time identifier to which the target data belongs.

In an optional implementation, the processing module 902 is specifically configured to:

perform bilinear pairing processing on the public key of the first device, the public key of the third device, and the private key of the second device to generate the third intermediate key, where the first intermediate key is generated by performing bilinear pairing processing on the public key of the second device, the public key of the third device, and the private key of the first device.

In an optional implementation, the processing module 902 is specifically configured to:

perform bilinear pairing processing on the public key of the first device, the public key of the third device, and the private key of the second device to generate the second target key, where the first target key is generated by performing bilinear pairing processing on the public key of the second device, the public key of the third device, and the private key of the first device.

In an optional implementation, the processing module 902 is further configured to:

generate the public key of the second device and the private key of the second device through bilinear pairing processing.

In an optional implementation, the bilinear pairing processing is asymmetric bilinear pairing processing.

In the foregoing implementations, the second device may be any one of a vehicle, a cloud server, or a supervision device.

The data decryption processing apparatus provided in this embodiment of this application may perform the method steps in the foregoing method embodiments. Implementation principles and technical effects thereof are similar. Details are not described herein again.

It should be noted and understood that division into the modules of the foregoing apparatus is merely logic function division. During actual implementation, some or all modules may be integrated into one physical entity, or the modules may be physically separated. In addition, all these modules may be implemented in a form of software invoked by a processing element, or may be implemented in a form of hardware. Alternatively, some modules may be implemented in a form of software invoked by a processing element, and some modules are implemented in a form of hardware. For example, a determining module may be an independently disposed processing element, or may be integrated in a chip of the foregoing apparatus for implementation. In addition, the determining module may alternatively be stored in a memory of the foregoing apparatus in a form of program code and invoked by a processing element of the foregoing apparatus to perform a function of the determining module. An implementation of another module is similar to the implementation of the determining module. In addition, all or some of these modules may be integrated together, or may be implemented independently. The processing element described herein may be an integrated circuit, and has a signal processing capability. In an implementation process, the steps in the foregoing methods or the foregoing modules may be implemented by using a hardware integrated logic circuit in the processor element, or by using instructions in a form of software.

For example, the foregoing modules may be configured as one or more integrated circuits for implementing the foregoing methods, such as one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of program code invoked by a processing element, the processing element may be a general-purpose processor, for example, a central processing unit (central processing unit, CPU) or another processor that can invoke the program code. For another example, these modules may be integrated together and implemented in a form of a system-on-a-chip (system-on-a-chip, SOC).

All or some of embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, a procedure or function according to embodiments of this application is all or partially generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

FIG. 10 is a schematic diagram of a structure of an electronic device according to an embodiment of this application. The electronic device may be the first device in the foregoing embodiments, or may be the second device in the foregoing embodiments. As shown in FIG. 10, the electronic device 1000 may include a processor 101 (for example, a CPU), a memory 102, and a transceiver 103. The transceiver 103 is coupled to the processor 101, and the processor 101 controls sending and receiving actions of the transceiver 103. The memory 102 may store various instructions to complete various processing functions and implement the method steps performed by the first device or the second device in embodiments of this application.

Optionally, the electronic device in this embodiment of this application may further include a power supply 104, a system bus 105, and a communications port 106. The transceiver 103 may be integrated into a transceiver machine of the electronic device, or may be an independent transceiver antenna of the electronic device. The system bus 105 is configured to implement communication connections between elements. The communications port 106 is configured to implement a connection and communication between the electronic device and another peripheral.

In this embodiment of this application, the processor 101 is configured to: be coupled to the memory 102, and read and execute the instructions in the memory 102. to implement the method steps performed by the first device or the second device in the foregoing method embodiments. The transceiver 103 is coupled to the processor 101, and the processor 101 controls the transceiver 103 to perform message receiving and sending. Implementation principles and technical effects thereof are similar. Details are not described herein again.

The system bus mentioned in FIG. 10 may be a peripheral component interconnect (peripheral component interconnect, PCI) bus, an extended industry standard architecture (extended industry standard architecture, EISA) bus, or the like. The system bus may be classified into an address bus, a data bus, a control bus, and the like. For ease of representation, only one bold line is used for representation in the figure, but this does not mean that there is only one bus or only one type of bus. The communications port 106 is configured to implement communication between a database access apparatus and another device (such as a client, a read/write database, or a read-only database). The memory may include a random access memory (random access memory, RAM), or may further include a nonvolatile memory (nonvolatile memory), for example, at least one magnetic disk memory.

The processor mentioned in FIG. 10 may be a general-purpose processor, such as a central processing unit CPU, a network processor (network processor, NP); or may be a digital signal processor DSP, an application-specific integrated circuit ASIC, a field programmable gate array FPGA or another programmable logic device, a discrete gate or transistor logic device, or a discrete hardware component.

Optionally, an embodiment of this application further provides a readable storage medium. The storage medium stores instructions. When the instructions are run on a computer, the computer is enabled to perform the methods in embodiments shown in FIG. 2 to FIG. 7.

Optionally, an embodiment of this application further provides a chip for running instructions. The chip is configured to perform the methods in embodiments shown in FIG. 2 to FIG. 7.

An embodiment of this application further provides a program product. The program product includes a computer program, the computer program is stored in a storage medium, and at least one processor may read the computer program from the storage medium. When executing the computer program, the at least one processor may implement the methods in embodiments shown in FIG. 2 to FIG. 7.

In embodiments of this application, "at least one" means one or more, and "a plurality of" means two or more. A term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. In a formula, the character "/" indicates a "division" relationship between the associated objects. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It may be understood that various numeric numbers in embodiments of this application are merely for differentiation for ease of description, and are not intended to limit the scope of embodiments of this application.

It may be understood that sequence numbers of the foregoing processes do not mean execution sequences in embodiments of the present invention. The execution sequences of the processes should be determined according to functions and internal logic of the processes, and should not be construed as any limitation on the implementation processes of embodiments of this application.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of the present invention.

## Claims

1.  A data encryption processing method, comprising:

    obtaining, by a first device, to-be-encrypted target data (S301);
    encrypting, by the first device, the target data based on a first target key (S303), to obtain encrypted data of the target data,
    **characterised in that**: the first target key is generated based on a public key of a second device, a public key of a third device, and a private key of the first device (S302), and comprises
    the first device performing symmetric bilinear pairing processing on $e(pk_S, pk_{AA})^x$ to obtain a key $e(P, P)^{xyz}$ which is used as the first target key, wherein $pk_S$ is the public key of the second device and is represented as $y \cdot P$, $pk_{AA}$ is the public key of the third device and is represented as $z \cdot P$, $P$ is a generator of a system public parameter, $x$ is the private key of the first device, $y$ is a private key of the second device, $z$ is a private key of the third device, and $e$ is a bilinear pairing operation; and
    sending, by the first device, the encrypted data of the target data to the second device (S304), wherein the encrypted data is decrypted by using a second target key, and the second target key is generated based on a private key of the second device, the public key of the third device, and a public key of the first device, wherein a process in which the second device generates the second target key is the same as the foregoing process in which the first device generates the first target key.

2.  The method according to claim 1, wherein:

    the first target key is generated based on the public key of the second device, the public key of the third device, the private key of the first device, and attribute information of the target data; and
    the second target key is generated based on the private key of the second device, the public key of the third device, the public key of the first device, and the attribute information of the target data;
    wherein the attribute information of the target data comprises at least one of a time identifier to which the target data belongs and a data type to which the target data belongs.

3.  The method according to claim 2, wherein the sending, by the first device, the encrypted data of the target data to the second device comprises:
    sending, by the first device, the encrypted data of the target data and the attribute information of the target data to the second device.

4.  The method according to claim 2 or 3, wherein:

    the first target key is generated based on a first intermediate key and the attribute information of the target data, wherein the first intermediate key is generated based on the public key of the second device, the public key of the third device, and the private key of the first device; and
    the second target key is generated based on a third intermediate key and the attribute information of the target data, wherein the third intermediate key is generated based on the private key of the second device, the public key of the third device, and the public key of the first device.

5.  The method according to claim 4, wherein:

    the first target key is generated based on a second intermediate key and the data type to which the target data belongs, wherein the second intermediate key is generated based on the first intermediate key and the time identifier to which the target data belongs; and
    the second target key is generated based on a fourth intermediate key and the data type to which the target data belongs, wherein the fourth intermediate key is generated based on the third intermediate key and the time identifier to which the target data belongs.

6. The method according to claim 4 or 5, wherein:

the first intermediate key is generated by performing bilinear pairing processing on the public key of the second device, the public key of the third device, and the private key of the first device; and
the third intermediate key is generated by performing bilinear pairing processing on the private key of the second device, the public key of the third device, and the public key of the first device.

7. The method according to any one of claims 1 to 6, wherein the method further comprises:
generating, by the first device, the public key of the first device and the private key of the first device through bilinear pairing processing.

8. A data decryption processing method, comprising:
receiving, by a second device, to-be-decrypted encrypted data (S701), wherein the encrypted data is obtained by encrypting target data by using a first target key, **characterised in that** the first target key is generated based on a private key of a first device, a public key of the second device, and a public key of a third device; and comprises:

the first device first using $e(pk_S, pk_{AA})^x$ to represent a key, and further performs symmetric bilinear pairing processing on $e(pk_S, pk_{AA})^x$ to obtain a key $e(P, P)^{xyz}$, which is used as the first target key, wherein $pk_S$ is the public key of the second device and is represented as $P \cdot y$, $pk_{AA}$ is the public key of the third device and is represented as $P \cdot z$, $P$ is a generator of a system public parameter, $x$ is the private key of the first device, $y$ is a private key of the second device, $z$ is a private key of the third device, and $e$ is a bilinear pairing operation; and
generating, by the second device, a second target key based on a public key of the first device, the public key of the third device, and the private key of the second device (S702), wherein a process in which the second device generates the second target key is the same as the foregoing process in which the first device generates the first target key; and
decrypting, by the second device, the encrypted data based on the second target key, to obtain the target data of the encrypted data (S703).

9. The method according to claim 8, wherein the generating, by the second device, a second target key based on a public key of the first device, the public key of the third device, and a private key of the second device comprises:

generating, by the second device, the second target key based on the public key of the first device, the public key of the third device, the private key of the second device, and attribute information of the target data; and
the first target key is generated based on the public key of the second device, the public key of the third device, the private key of the first device, and the attribute information of the target data;
wherein the attribute information of the target data comprises at least one of a time identifier to which the target data belongs and a data type to which the target data belongs.

10. The method according to claim 9, wherein the generating, by the second device, the second target key based on the public key of the first device, the public key of the third device, the private key of the second device, and attribute information of the target data comprises:

generating, by the second device, a third intermediate key based on the public key of the first device, the public key of the third device, and the private key of the second device;
generating, by the second device, the second target key based on the third intermediate key and the attribute information of the target data;
wherein the first target key is generated based on a first intermediate key and the attribute information of the target data, wherein the first intermediate key is generated based on the public key of the second device, the public key of the third device, and the private key of the first device.

11. The method according to claim 10, wherein the generating, by the second device, the second target key based on the third intermediate key and the attribute information of the target data comprises:

generating, by the second device, a fourth intermediate key based on the third intermediate key and the time identifier to which the target data belongs; and

generating, by the second device, the second target key based on the fourth intermediate key and the data type to which the target data belongs;

wherein the first target key is generated based on a second intermediate key and the data type to which the target data belongs, wherein the second intermediate key is generated based on the first intermediate key and the time identifier to which the target data belongs.

12. The method according to claim 10 or 11, wherein the generating, by the second device, a third intermediate key based on the public key of the first device, the public key of the third device, and the private key of the second device comprises:

performing, by the second device, bilinear pairing processing on the public key of the first device, the public key of the third device, and the private key of the second device to generate the third intermediate key;

wherein the first intermediate key is generated by performing bilinear pairing processing on the public key of the second device, the public key of the third device, and the private key of the first device.

13. An electronic device, comprising a processor, a memory, and a transceiver, wherein

the memory is coupled to the processor, the memory is configured to store computer program code, the computer program code comprises computer instructions, and when the processor reads the computer instructions from the memory, the electronic device is enabled to perform the method steps according to any one of claims 1 to 7 or any one of claims 8 to 12; and
the transceiver is coupled to the processor, and the processor controls the transceiver to perform message receiving and sending.

14. A readable storage medium, wherein the readable storage medium stores executable instructions, and when at least one processor of an electronic device executes the executable instructions, the electronic device performs the method steps according to any one of claims 1 to 7 or any one of claims 8 to 12.

**Patentansprüche**

1. Verarbeitungsverfahren zur Datenverschlüsselung, umfassend:

Erhalten, durch eine erste Vorrichtung, von zu verschlüsselnden Zieldaten (S301);
Verschlüsseln, durch die erste Vorrichtung, der Zieldaten basierend auf einem ersten Zielschlüssel (S303), um verschlüsselte Daten der Zieldaten zu erhalten,
**dadurch gekennzeichnet, dass**:

der erste Zielschlüssel basierend auf einem öffentlichen Schlüssel einer zweiten Vorrichtung, einem öffentlichen Schlüssel einer dritten Vorrichtung und einem privaten Schlüssel der ersten Vorrichtung erzeugt wird (S302), und umfassend, dass die erste Vorrichtung eine symmetrische bilineare Paarungsverarbeitung an $e(pk_s, pk_{AA})^x$ durchführt, um einen Schlüssel $e(P, P)^{xyz}$ zu erhalten, der als der erste Zielschlüssel verwendet wird, wobei $pk_s$ der öffentliche Schlüssel der zweiten Vorrichtung ist und als $y \cdot P$ dargestellt wird, $pk_{AA}$ der öffentliche Schlüssel der dritten Vorrichtung ist und als $z \cdot P$ dargestellt wird, P ein Generator eines öffentlichen Systemparameters ist, x der private Schlüssel der ersten Vorrichtung ist, y ein privater Schlüssel der zweiten Vorrichtung ist, z ein privater Schlüssel der dritten Vorrichtung ist und e eine bilineare Paarungsoperation ist; und
Senden, durch die erste Vorrichtung, der verschlüsselten Daten der Zieldaten an die zweite Vorrichtung (S304), wobei die verschlüsselten Daten unter Verwendung eines zweiten Zielschlüssels entschlüsselt werden und der zweite Zielschlüssel basierend auf einem privaten Schlüssel der zweiten Vorrichtung, dem öffentlichen Schlüssel der dritten Vorrichtung und einem öffentlichen Schlüssel der ersten Vorrichtung erzeugt wird, wobei ein Verfahren, bei dem die zweite Vorrichtung den zweiten Zielschlüssel erzeugt, dasselbe ist wie das vorangehende Verfahren, bei dem die erste Vorrichtung den ersten Zielschlüssel erzeugt.

2. Verfahren gemäß Anspruch 1, wobei:

der erste Zielschlüssel basierend auf dem öffentlichen Schlüssel der zweiten Vorrichtung, dem öffentlichen Schlüssel der dritten Vorrichtung, dem privaten Schlüssel der ersten Vorrichtung und Attributinformationen der Zieldaten erzeugt wird; und

der zweite Zielschlüssel basierend auf dem privaten Schlüssel der zweiten Vorrichtung, dem öffentlichen Schlüssel der dritten Vorrichtung, dem öffentlichen Schlüssel der ersten Vorrichtung und den Attributinformationen der Zieldaten erzeugt wird;

wobei die Attributinformationen der Zieldaten mindestens einen Zeitkennzeichner, zu dem die Zieldaten gehören, und einen Datentyp, zu dem die Zieldaten gehören, umfassen.

3. Verfahren gemäß Anspruch 2, wobei das Senden, durch die erste Vorrichtung, der verschlüsselten Daten der Zieldaten an die zweite Vorrichtung umfasst:

Senden, durch die erste Vorrichtung, der verschlüsselten Daten der Zieldaten und der Attributinformationen der Zieldaten an die zweite Vorrichtung.

4. Verfahren gemäß Anspruch 2 oder 3, wobei:

der erste Zielschlüssel basierend auf einem ersten Zwischenschlüssel und den Attributinformationen der Zieldaten erzeugt wird, wobei der erste Zwischenschlüssel basierend auf dem öffentlichen Schlüssel der zweiten Vorrichtung, dem öffentlichen Schlüssel der dritten Vorrichtung und dem privaten Schlüssel der ersten Vorrichtung erzeugt wird; und

der zweite Zielschlüssel basierend auf einem dritten Zwischenschlüssel und den Attributinformationen der Zieldaten erzeugt wird, wobei der dritte Zwischenschlüssel basierend auf dem privaten Schlüssel der zweiten Vorrichtung, dem öffentlichen Schlüssel der dritten Vorrichtung und dem öffentlichen Schlüssel der ersten Vorrichtung erzeugt wird.

5. Verfahren gemäß Anspruch 4, wobei:

der erste Zielschlüssel basierend auf einem zweiten Zwischenschlüssel und dem Datentyp, zu dem die Zieldaten gehören, erzeugt wird, wobei der zweite Zwischenschlüssel basierend auf dem ersten Zwischenschlüssel und dem Zeitkennzeichner, zu dem die Zieldaten gehören, erzeugt wird; und

der zweite Zielschlüssel basierend auf einem vierten Zwischenschlüssel und dem Datentyp, zu dem die Zieldaten gehören, erzeugt wird, wobei der vierte Zwischenschlüssel basierend auf dem dritten Zwischenschlüssel und dem Zeitkennzeichner, zu dem die Zieldaten gehören, erzeugt wird.

6. Verfahren gemäß Anspruch 4 oder 5, wobei:

der erste Zwischenschlüssel erzeugt wird, indem eine bilineare Paarungsverarbeitung an dem öffentlichen Schlüssel der zweiten Vorrichtung, dem öffentlichen Schlüssel der dritten Vorrichtung und dem privaten Schlüssel der ersten Vorrichtung durchgeführt wird; und

wobei der dritte Zwischenschlüssel erzeugt wird, indem eine bilineare Paarungsverarbeitung an dem privaten Schlüssel der zweiten Vorrichtung, dem öffentlichen Schlüssel der dritten Vorrichtung und dem öffentlichen Schlüssel der ersten Vorrichtung durchgeführt wird.

7. Verfahren gemäß einem der Ansprüche 1 bis 6, wobei das Verfahren ferner umfasst: Erzeugen, durch die erste Vorrichtung, des öffentlichen Schlüssels der ersten Vorrichtung und des privaten Schlüssels der ersten Vorrichtung durch bilineare Paarungsverarbeitung.

8. Verarbeitungsverfahren zur Datenentschlüsselung, umfassend:

Empfangen, durch eine zweite Vorrichtung, von zu entschlüsselnden verschlüsselten Daten (S701), wobei die verschlüsselten Daten durch Verschlüsseln von Zieldaten unter Verwendung eines ersten Zielschlüssels erhalten werden, **dadurch gekennzeichnet, dass** der erste Zielschlüssel basierend auf einem privaten Schlüssel einer ersten Vorrichtung, einem öffentlichen Schlüssel der zweiten Vorrichtung und einem öffentlichen Schlüssel einer dritten Vorrichtung erzeugt wird; und umfasst:

die erste Vorrichtung verwendet zunächst $e(pk_s, pk_{AA})^x$, um einen Schlüssel darzustellen, und führt ferner eine symmetrische bilineare Paarungsverarbeitung an $e(pk_s, pk_{AA})^x$ durch, um einen Schlüssel $e(P, P)^{yxz}$ zu erhalten, der als der erste Zielschlüssel verwendet wird, wobei $pk_s$ der öffentliche Schlüssel der zweiten Vorrichtung ist und als $P \cdot y$ dargestellt wird, $pk_{AA}$ der öffentliche Schlüssel der dritten Vorrichtung ist und als $P \cdot z$ dargestellt wird, $P$ ein Generator eines öffentlichen Systemparameters ist, $x$ der private Schlüssel der ersten Vorrichtung ist, $y$ ein privater Schlüssel der zweiten Vorrichtung ist, z ein privater Schlüssel der dritten Vorrichtung ist und e eine bilineare Paarungsoperation ist; und

Erzeugen, durch die zweite Vorrichtung, eines zweiten Zielschlüssels basierend auf einem öffentlichen Schlüssel der ersten Vorrichtung, dem öffentlichen Schlüssel der dritten Vorrichtung und dem privaten Schlüssel der zweiten Vorrichtung (S702), wobei ein Verfahren, bei dem die zweite Vorrichtung den zweiten Zielschlüssel erzeugt, dasselbe ist wie das vorangehende Verfahren, bei dem die erste Vorrichtung den ersten Zielschlüssel erzeugt; und

Entschlüsseln, durch die zweite Vorrichtung, der verschlüsselten Daten basierend auf dem zweiten Zielschlüssel, um die Zieldaten der verschlüsselten Daten zu erhalten (S703).

9. Verfahren gemäß Anspruch 8, wobei das Erzeugen, durch die zweite Vorrichtung, eines zweiten Zielschlüssels basierend auf einem öffentlichen Schlüssel der ersten Vorrichtung, dem öffentlichen Schlüssel der dritten Vorrichtung und einem privaten Schlüssel der zweiten Vorrichtung umfasst:

Erzeugen, durch die zweite Vorrichtung, des zweiten Zielschlüssels basierend auf dem öffentlichen Schlüssel der ersten Vorrichtung, dem öffentlichen Schlüssel der dritten Vorrichtung, dem privaten Schlüssel der zweiten Vorrichtung und Attributinformationen der Zieldaten; und

der erste Zielschlüssel basierend auf dem öffentlichen Schlüssel der zweiten Vorrichtung, dem öffentlichen Schlüssel der dritten Vorrichtung, dem privaten Schlüssel der ersten Vorrichtung und den Attributinformationen der Zieldaten erzeugt wird;

wobei die Attributinformationen der Zieldaten mindestens einen Zeitkennzeichner, zu dem die Zieldaten gehören, und einen Datentyp, zu dem die Zieldaten gehören, umfassen.

10. Verfahren gemäß Anspruch 9, wobei das Erzeugen, durch die zweite Vorrichtung, des zweiten Zielschlüssels basierend auf dem öffentlichen Schlüssel der ersten Vorrichtung, dem öffentlichen Schlüssel der dritten Vorrichtung, dem privaten Schlüssel der zweiten Vorrichtung und Attributinformationen der Zieldaten umfasst:

Erzeugen, durch die zweite Vorrichtung, eines dritten Zwischenschlüssels, basierend auf dem öffentlichen Schlüssel der ersten Vorrichtung, dem öffentlichen Schlüssel der dritten Vorrichtung und dem privaten Schlüssel der zweiten Vorrichtung;

Erzeugen, durch die zweite Vorrichtung, des zweiten Zielschlüssels basierend auf dem dritten Zwischenschlüssel und den Attributinformationen der Zieldaten;

wobei der erste Zielschlüssel basierend auf einem ersten Zwischenschlüssel und den Attributinformationen der Zieldaten erzeugt wird, wobei der erste Zwischenschlüssel basierend auf dem öffentlichen Schlüssel der zweiten Vorrichtung, dem öffentlichen Schlüssel der dritten Vorrichtung und dem privaten Schlüssel der ersten Vorrichtung erzeugt wird.

11. Verfahren gemäß Anspruch 10, wobei das Erzeugen, durch die zweite Vorrichtung, des zweiten Zielschlüssels basierend auf dem dritten Zwischenschlüssel und den Attributinformationen der Zieldaten umfasst:

Erzeugen, durch die zweite Vorrichtung, eines vierten Zwischenschlüssels basierend auf dem dritten Zwischenschlüssel und dem Zeitkennzeichner, zu dem die Zieldaten gehören; und

Erzeugen, durch die zweite Vorrichtung, des zweiten Zielschlüssels basierend auf dem vierten Zwischenschlüssel und dem Datentyp, zu dem die Zieldaten gehören;

wobei der erste Zielschlüssel basierend auf einem zweiten Zwischenschlüssel und dem Datentyp, zu dem die Zieldaten gehören, erzeugt wird, wobei der zweite Zwischenschlüssel basierend auf dem ersten Zwischenschlüssel und dem Zeitkennzeichner, zu dem die Zieldaten gehören, erzeugt wird.

12. Verfahren gemäß Anspruch 10 oder 11, wobei das Erzeugen, durch die zweite Vorrichtung, eines dritten Zwischenschlüssels basierend auf dem öffentlichen Schlüssel der ersten Vorrichtung, dem öffentlichen Schlüssel der dritten Vorrichtung und dem privaten Schlüssel der zweiten Vorrichtung umfasst:

Durchführen, durch die zweite Vorrichtung, einer bilinearen Paarungsverarbeitung an dem öffentlichen Schlüssel der ersten Vorrichtung, dem öffentlichen Schlüssel der dritten Vorrichtung und dem privaten Schlüssel der zweiten Vorrichtung, um den dritten Zwischenschlüssel zu erzeugen;

wobei der erste Zwischenschlüssel erzeugt wird, indem eine bilineare Paarungsverarbeitung an dem öffentlichen Schlüssel der zweiten Vorrichtung, dem öffentlichen Schlüssel der dritten Vorrichtung und dem privaten Schlüssel der ersten Vorrichtung durchgeführt wird.

**13.** Elektronische Vorrichtung, einen Prozessor, einen Speicher und einen Sendeempfänger umfassend, wobei der Speicher mit dem Prozessor gekoppelt ist, der Speicher dafür ausgelegt ist, Computerprogrammcode zu speichern, der Computerprogrammcode Computeranweisungen umfasst, und, wenn der Prozessor die Computeranweisungen aus dem Speicher liest, die elektronische Vorrichtung in die Lage versetzt wird, die Verfahrensschritte gemäß einem der Ansprüche 1 bis 7 oder einem der Ansprüche 8 bis 12 durchzuführen; und der Sendeempfänger mit dem Prozessor gekoppelt ist und der Prozessor den Sendeempfänger steuert, um den Empfang und das Senden von Nachrichten durchzuführen.

**14.** Lesbares Speichermedium, wobei das lesbare Speichermedium ausführbare Anweisungen speichert, und wenn mindestens ein Prozessor einer elektronischen Vorrichtung die ausführbaren Anweisungen ausführt, führt die elektronische Vorrichtung die Verfahrensschritte gemäß einem der Ansprüche 1 bis 7 oder einem der Ansprüche 8 bis 12 aus.

**Revendications**

**1.** Procédé de traitement de cryptage de données, comprenant les étapes consistant à :

obtenir, par un premier dispositif, des données cibles à crypter (S301) ;
crypter, par le premier dispositif, les données cibles sur la base d'une première clé cible (S303), afin d'obtenir des données cryptées des données cibles,
le procédé étant **caractérisé en ce que** :
la première clé cible est générée sur la base d'une clé publique d'un deuxième dispositif, d'une clé publique d'un troisième dispositif et d'une clé privée du premier dispositif (S302) ; et **en ce qu'**il comprend les étapes consistant à :

réaliser, par le premier dispositif, un traitement d'appariement bilinéaire symétrique sur $e(pk_S, pk_{AA})^x$ pour obtenir une clé $e(P, P)^{xyz}$ qui est utilisée comme première clé cible, $pk_S$ étant la clé publique du deuxième dispositif et étant représentée par $y \cdot P$, $pk^{AA}$ étant la clé publique du troisième dispositif et étant représentée par $z \cdot P$, $P$ étant un générateur d'un paramètre public de système, $x$ étant la clé privée du premier dispositif, $y$ étant une clé privée du deuxième dispositif, $z$ étant une clé privée du troisième dispositif, et $e$ étant une opération d'appariement bilinéaire ; et
envoyer, par le premier dispositif, les données cryptées des données cibles au deuxième dispositif (S304), les données cryptées étant décryptées au moyen d'une seconde clé cible, et la seconde clé cible étant générée sur la base d'une clé privée du deuxième dispositif, de la clé publique du troisième dispositif et d'une clé publique du premier dispositif, un processus au cours duquel le deuxième dispositif génère la seconde clé cible étant le même que le processus précédent au cours duquel le premier dispositif génère la première clé cible.

**2.** Procédé selon la revendication 1,

la première clé cible étant générée sur la base de la clé publique du deuxième dispositif, de la clé publique du troisième dispositif, de la clé privée du premier dispositif et d'informations d'attribut des données cibles ; et
la seconde clé cible étant générée sur la base de la clé privée du deuxième dispositif, de la clé publique du troisième dispositif, de la clé publique du premier dispositif et des informations d'attribut des données cibles ;
les informations d'attribut des données cibles comprenant au moins un élément parmi un identifiant temporel auquel appartiennent les données cibles et un type de données auquel appartiennent les données cibles.

**3.** Procédé selon la revendication 2, l'envoi, par le premier dispositif, des données cryptées des données cibles au deuxième dispositif comprenant l'étape consistant à : envoyer, par le premier dispositif, les données cryptées des données cibles et les informations d'attribut des données cibles au deuxième dispositif.

**4.** Procédé selon la revendication 2 ou 3,

la première clé cible étant générée sur la base d'une première clé intermédiaire et des informations d'attribut des données cibles, la première clé intermédiaire étant générée sur la base de la clé publique du deuxième dispositif, de la clé publique du troisième dispositif et de la clé privée du premier dispositif ; et
la seconde clé cible étant générée sur la base d'une troisième clé intermédiaire et des informations d'attribut des données cibles, la troisième clé intermédiaire étant générée sur la base de la clé privée du deuxième dispositif, de la clé publique du troisième dispositif et de la clé publique du premier dispositif.

**5.** Procédé selon la revendication 4,

la première clé cible étant générée sur la base d'une deuxième clé intermédiaire et du type de données auquel appartiennent les données cibles, la deuxième clé intermédiaire étant générée sur la base de la première clé intermédiaire et de l'identifiant temporel auquel appartiennent les données cibles ; et
la seconde clé cible étant générée sur la base d'une quatrième clé intermédiaire et du type de données auquel appartiennent les données cibles, la quatrième clé intermédiaire étant générée sur la base de la troisième clé intermédiaire et de l'identifiant temporel auquel appartiennent les données cibles.

**6.** Procédé selon la revendication 4 ou 5,

la première clé intermédiaire étant générée en réalisant un traitement d'appariement bilinéaire sur la clé publique du deuxième dispositif, la clé publique du troisième dispositif et la clé privée du premier dispositif ; et
la troisième clé intermédiaire étant générée en réalisant un traitement d'appariement bilinéaire sur la clé privée du deuxième dispositif, la clé publique du troisième dispositif et la clé publique du premier dispositif.

**7.** Procédé selon l'une quelconque des revendications 1 à 6, le procédé comprenant en outre l'étape consistant à :
générer, par le premier dispositif, la clé publique du premier dispositif et la clé privée du premier dispositif par l'intermédiaire d'un traitement d'appariement bilinéaire.

**8.** Procédé de traitement de décryptage de données, comprenant l'étape consistant à :

recevoir, par un deuxième dispositif, des données cryptées à décrypter (S701), les données cryptées étant obtenues en cryptant des données cibles au moyen d'une première clé cible,
le procédé étant **caractérisé en ce que** :
la première clé cible est générée sur la base d'une clé privée d'un premier dispositif, d'une clé publique du deuxième dispositif et d'une clé publique d'un troisième dispositif ; et **en ce qu'**il comprend les étapes consistant à :

utiliser, par le premier dispositif, $e(pk_S, pk_{AA})^x$ pour représenter une clé, et réaliser en outre un traitement d'appariement bilinéaire symétrique sur $e(pk_S, pk_{AA})^x$ pour obtenir une clé $e(P, P)^{xyz}$ qui est utilisée comme première clé cible, $pk_S$ étant la clé publique du deuxième dispositif et étant représentée par $P \cdot y$, $pk^{AA}$ étant la clé publique du troisième dispositif et étant représentée par $P \cdot z$, P étant un générateur d'un paramètre public de système, x étant la clé privée du premier dispositif, y étant une clé privée du deuxième dispositif, z étant une clé privée du troisième dispositif, et e étant une opération d'appariement bilinéaire ; et
générer, par le deuxième dispositif, une seconde clé cible sur la base d'une clé publique du premier dispositif, de la clé publique du troisième dispositif et de la clé privée du deuxième dispositif (S702), un processus au cours duquel le deuxième dispositif génère la seconde clé cible étant le même que le processus précédent au cours duquel le premier dispositif génère la première clé cible ; et
décrypter, par le deuxième dispositif, les données cryptées sur la base de la seconde clé cible, afin d'obtenir les données cibles des données cryptées (S703).

**9.** Procédé selon la revendication 8, la génération, par le deuxième dispositif, d'une seconde clé cible sur la base d'une clé publique du premier dispositif, de la clé publique du troisième dispositif et d'une clé privée du deuxième dispositif comprenant l'étape consistant à :

générer, par le deuxième dispositif, la seconde clé cible sur la base de la clé publique du premier dispositif, de la clé publique du troisième dispositif, de la clé privée du deuxième dispositif et d'informations d'attribut des données cibles ; et
la première clé cible étant générée sur la base de la clé publique du deuxième dispositif, de la clé publique du troisième dispositif, de la clé privée du premier dispositif et des informations d'attribut des données cibles ;
les informations d'attribut des données cibles comprenant au moins un élément parmi un identifiant temporel auquel appartiennent les données cibles et un type de données auquel appartiennent les données cibles.

**10.** Procédé selon la revendication 9, la génération, par le deuxième dispositif, de la seconde clé cible sur la base de la clé publique du premier dispositif, de la clé publique du troisième dispositif, de la clé privée du deuxième dispositif et d'informations d'attribut des données cibles comprenant les étapes consistant à :

générer, par le deuxième dispositif, une troisième clé intermédiaire sur la base de la clé publique du premier dispositif, de la clé publique du troisième dispositif et de la clé privée du deuxième dispositif ;

générer, par le deuxième dispositif, la seconde clé cible sur la base de la troisième clé intermédiaire et des informations d'attribut des données cibles ;

la première clé cible étant générée sur la base d'une première clé intermédiaire et des informations d'attribut des données cibles, la première clé intermédiaire étant générée sur la base de la clé publique du deuxième dispositif, de la clé publique du troisième dispositif et de la clé privée du premier dispositif.

11. Procédé selon la revendication 10, la génération, par le deuxième dispositif, de la seconde clé cible sur la base de la troisième clé intermédiaire et des informations d'attribut des données cibles comprenant les étapes consistant à :

générer, par le deuxième dispositif, une quatrième clé intermédiaire sur la base de la troisième clé intermédiaire et de l'identifiant temporel auquel appartiennent les données cibles ; et

générer, par le deuxième dispositif, la seconde clé cible sur la base de la quatrième clé intermédiaire et du type de données auquel appartiennent les données cibles ;

la première clé cible étant générée sur la base d'une deuxième clé intermédiaire et du type de données auquel appartiennent les données cibles, la deuxième clé intermédiaire étant générée sur la base de la première clé intermédiaire et de l'identifiant temporel auquel appartiennent les données cibles.

12. Procédé selon la revendication 10 ou 11, la génération, par le deuxième dispositif, d'une troisième clé intermédiaire sur la base de la clé publique du premier dispositif, de la clé publique du troisième dispositif et de la clé privée du deuxième dispositif comprenant l'étape consistant à :

réaliser, par le deuxième dispositif, un traitement d'appariement bilinéaire sur la clé publique du premier dispositif, la clé publique du troisième dispositif et la clé privée du deuxième dispositif pour générer la troisième clé intermédiaire ;

la première clé intermédiaire étant générée en réalisant un traitement d'appariement bilinéaire sur la clé publique du deuxième dispositif, la clé publique du troisième dispositif et la clé privée du premier dispositif.

13. Dispositif électronique, comprenant un processeur, une mémoire et un émetteur-récepteur,

la mémoire étant couplée au processeur, la mémoire étant configurée pour stocker un code de programme informatique, le code de programme informatique comprenant des instructions informatiques qui, lorsqu'elles sont lues à partir de la mémoire par le processeur, permettent au dispositif électronique de réaliser les étapes de procédé selon l'une quelconque des revendications 1 à 7 ou l'une quelconque des revendications 8 à 12 ; et l'émetteur-récepteur étant couplé au processeur, et le processeur commandant l'émetteur-récepteur pour réaliser la réception et l'envoi de messages.

14. Support de stockage lisible, le support de stockage lisible stockant des instructions exécutables qui, lorsqu'elles sont exécutées par au moins un processeur d'un dispositif électronique, amènent le dispositif électronique à réaliser les étapes de procédé selon l'une quelconque des revendications 1 à 7 ou l'une quelconque des revendications 8 à 12.

Cloud server

Supervision device

Vehicle

FIG. 1

Cloud server

Vehicle

Terminal device

FIG. 2

S301

A first device obtains to-be-encrypted target data

S302

The first device generates a first target key based on a public key of a second device, a public key of a third device, and a private key of the first device

S303

The first device encrypts the target data based on the first target key, to obtain encrypted data of the target data

S304

The first device sends the encrypted data of the target data to the second device

FIG. 3

Ciphertext C

Time identifier         Encrypted data C1

## FIG. 4

Ciphertext C

| Data type 1 | Encrypted data $C_1$ | Data type 2 | Encrypted data $C_2$ | ... | Data type t | Encrypted data $C_t$ |

## FIG. 5

Ciphertext C

| Time identifier | Data type 1 | Encrypted data $C_1$ | Data type 2 | Encrypted data $C_2$ | ... | Data type t | Encrypted data $C_t$ |

## FIG. 6

S701

A second device receives to-be-decrypted encrypted data

S702

The second device generates a second target key based on a public key of a first device, a public key of a third device, and a private key of the second device

S703

The second device decrypts the encrypted data based on the second target key, to obtain a target data

FIG. 7

Data encryption processing apparatus

801

802

| Processing module | Transceiver module |

FIG. 8

Data decryption processing apparatus

901

902

| Transceiver module | Processing module |

FIG. 9

| Processor | Power supply | |
| Transceiver | Communications port | Memory |

101

104

102

105

103

106

1000

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 106533662 A

- EP 1747638 B1

### Non-patent literature cited in the description

- Chapter 12: Key Establishment Protocols ED - Menezes A J; Van Oorschot P C; Vanstone S A. HANDBOOK OF APPLIED CRYPTOGRAPHY; [CRC PRESS SERIES ON DISCRETE MATHEMATICES AND ITS APPLICATIONS. CRC PRESS, 01 October 1996, 489-541